# FASCICULE DE BREVET EUROPEEN

(11) **EP 1 573 363 B1**
(45) Date de publication et mention de la délivrance du brevet: **21.09.2011**
(21) Numéro de dépôt: 03799574.3
(22) Date de dépôt: 16.12.2003
(51) Int. Cl.: G01T 1/20

(54) **DÉTECTEUR DE RAYONNEMENT X À L'ÉTAT SOLIDE**
FESTKÖRPER-RÖNTGENSTRAHLUNGSDETEKTOR
SOLID-STATE X-RAY DETECTOR

(30) Priorité: 17.12.2002 FR 0215995
(43) Date de publication de la demande: 14.09.2005
(73) Titulaire: Trixell S.A.S., 38430 Moirans (FR)
(72) Inventeur: MONIN, Didier, F-94117 ARCUEIL (FR); COMMERE, Bruno, F-94117 ARCUEIL (FR); VIEUX, Gérard, F-94117 ARCUEIL (FR)
(74) Mandataire: Collet, Alain
(86) Numéro de dépôt international: PCT/EP2003/051016
(87) Numéro de publication internationale: WO 2004/055549

(56) Documents cités:
- FR-A- 2 605 166
- FR-A- 2 758 654
- FR-A- 2 758 656
- FR-A- 2 760 585
- FR-A- 2 831 671
- US-A- 5 932 880

## Description

La présente invention concerne un détecteur de rayonnement X à l'état solide comportant un capteur photosensible associé à un convertisseur de rayonnement. Les domaines d'application de ce type de détecteur sont notamment la radiologie : radiographie, fluoroscopie, mammographie, mais également le contrôle non destructif.

De tels détecteurs de rayonnement sont connus par exemple par le brevet français FR 2 605 166 dans lequel un capteur photosensible formé de photodiodes en silicium amorphe est associé à un convertisseur de rayonnement.

Le fonctionnement et la structure d'un tel détecteur de rayonnement vont être rappelés succinctement.

Le capteur photosensible est généralement réalisé à partir d'éléments photosensibles à l'état solide arrangés en matrice. Les éléments photosensibles sont réalisés à partir de matériaux semi-conducteurs, le plus souvent du silicium mono cristallin pour les capteurs de type CCD ou CMOS, du silicium poly cristallin ou amorphe. Un élément photosensible comporte au moins une photodiode, un phototransistor ou une photo résistance. Ces éléments sont déposés sur un substrat, généralement une dalle de verre.

Ces éléments ne sont généralement pas sensibles directement aux rayonnements de longueurs d'ondes très courtes comme le sont les rayons X ou gamma. C'est pourquoi, on associe le capteur photosensible à un convertisseur de rayonnement qui comporte une couche d'une substance scintillatrice. Cette substance a la propriété, lorsqu'elle est excitée par de tels rayonnements, d'émettre un rayonnement de longueur d'onde supérieure, par exemple de la lumière visible ou proche du visible, auquel est sensible le capteur. La lumière émise par le convertisseur de rayonnement illumine les éléments photosensibles du capteur qui effectuent une conversion photoélectrique et délivrent des signaux électriques exploitables par des circuits appropriés. Le convertisseur de rayonnement sera appelé scintillateur dans la suite de la description.

Certaines substances scintillatrices de la famille des halogénures alcalins ou des oxysulfures de terres rares sont fréquemment employées pour leurs bonnes performances.

Parmi les halogénures alcalins, l'iodure de césium dopé au sodium ou au thallium selon que l'on souhaite une émission vers 400 nanomètres ou vers 550 nanomètres respectivement, est connu pour sa forte absorption des rayons X et pour son excellent rendement de fluorescence. Il se présente sous la forme de fines aiguilles que l'on fait croître sur un support. Ces aiguilles sont sensiblement perpendiculaires à ce support et elles confinent en partie la lumière émise vers le capteur. Leur finesse conditionne la résolution du détecteur. Les oxysulfures de lanthane et de gadolinium sont aussi très employés pour les mêmes raisons.

Mais parmi ces substances scintillatrices, certaines ont comme inconvénient d'être peu stables, elles se décomposent partiellement lorsqu'elles sont exposées à l'humidité et leur décomposition libère des espèces chimiques qui migrent soit vers le capteur soit à l'opposé du capteur. Ces espèces sont très corrosives. L'iodure de césium et l'oxysulfure de lanthane ont notamment cet inconvénient.

En ce qui concerne l'iodure de césium, sa décomposition donne de l'hydroxyde de césium Cs+ OH- et de l'iode libre I₂ qui peut ensuite se combiner avec des ions iodures pour donner le complexe I₃⁻.

En ce qui concerne l'oxysulfure de lanthane sa décomposition donne du sulfure d'hydrogène H₂S chimiquement très agressif.

La dégradation de la substance scintillatrice peut notamment être responsable de l'apparition de courants de fuite dans la structure matricielle de photodétection, courants de fuite qui peuvent générer des altérations visibles et de surcroît évolutives de l'image produite par le détecteur.

L'humidité est extrêmement difficile à supprimer. L'air ambiant, ainsi que la colle utilisée pour l'assemblage du détecteur, en contiennent toujours. La présence d'humidité dans la colle est due soit à l'air ambiant, soit à la polymérisation si celle-ci résulte de la condensation de deux espèces chimiques, ce qui est fréquent.

Un des aspects importants lors de la réalisation de ces détecteurs sera de minimiser la quantité d'humidité présente initialement à l'intérieur du détecteur, et en contact avec le scintillateur, et d'éviter la diffusion de cette humidité à l'intérieur du capteur lors de son fonctionnement.

Les détecteurs de rayonnement comportent une fenêtre d'entrée traversée par le rayonnement X en amont du scintillateur. Par ailleurs, la substance scintillatrice est généralement déposée sur un support métallique. Le support et la substance scintillatrice forment alors le scintillateur. De plus, il est connu d'utiliser le support comme fenêtre d'entrée.

Lorsque la substance scintillatrice est déposée directement sur la fenêtre d'entrée pour former le scintillateur qui est ensuite rapporté sur le capteur, la fenêtre d'entrée doit supporter sans dommage les contraintes thermiques du dépôt et du traitement du scintillateur et posséder préférentiellement un coefficient de dilatation du même ordre de grandeur que celui du scintillateur et que celui du capteur, plus particulièrement celui de son substrat. On peut aussi prévoir que la fenêtre ait un module d'élasticité faible, ce qui permet de supprimer des contraintes différentielles entre d'une part la fenêtre et le scintillateur et d'autre part la fenêtre et le capteur, ou plus particulièrement le substrat du capteur. On supprime ainsi les risques de craquèlement du scintillateur et de bris du substrat du capteur.

On a également cherché à séparer les fonctions de fenêtre d'entrée et de support du scintillateur en ajoutant une fenêtre d'entrée additionnelle n'assurant que la fonction d'étanchéité du détecteur. Les contraintes auxquelles était soumis le support du scintillateur sont alors réparties entre le support et la fenêtre d'entrée additionnelle. Le support du scintillateur reste soumis aux mêmes contraintes de réflectivité et d'état de surface pour le dépôt de scintillateur que dans l'état de l'art. Par contre, il n'est plus soumis aux contraintes d'étanchéité et de support du joint de scellement. Ces contraintes sont reportées sur la fenêtre d'entrée additionnelle. Une telle réalisation est décrite dans la demande de brevet FR 01-13899 déposée le 26 octobre 2001 au nom de la demanderesse.

Ces précautions pour améliorer l'étanchéité du détecteur ne suffisent pas pour stopper complètement la décomposition des substances scintillatrices. On s'est rendu compte que la migration d'espèces ioniques était favorisée par l'existence d'un champ électrique induit entre la matrice d'éléments photosensibles et le substrat du scintillateur lors du fonctionnement du détecteur.

L'invention a pour but de limiter la décomposition des substances scintillatrices. A cet effet l'invention a pour objet un détecteur de rayonnement X à l'état solide comportant un capteur photosensible, un scintillateur transformant le rayonnement X en un rayonnement auquel le capteur est sensible, le détecteur comportant des moyens pour annuler le champ électrique induit entre la matrice d'éléments photosensibles et le substrat du scintillateur lors du fonctionnement du détecteur.

En d'autres termes, l'invention a pour objet un détecteur de rayonnement X à l'état solide comportant un capteur photosensible, un scintillateur transformant le rayonnement X en un rayonnement auquel le capteur est sensible, et une fenêtre d'entrée traversée par le rayonnement X en amont du scintillateur, caractérisé en ce que le détecteur comporte des moyens pour appliquer une tension électrique entre la fenêtre d'entrée et le capteur photosensible.

L'invention peut être mise en oeuvre dans deux configurations d'assemblage du scintillateur et du capteur.

Dans une première configuration, dite du scintillateur rapporté, la substance scintillatrice est déposée sur un support que le rayonnement à détecter doit traverser avant d'atteindre le capteur. Le support forme la fenêtre d'entrée du détecteur. L'ensemble est alors collé sur le capteur.

Dans une seconde configuration, dite du dépôt direct, le capteur sert de support à la substance scintillatrice qui est alors en contact direct et intime avec le capteur. La substance scintillatrice est ensuite recouverte d'une feuille de protection formant la fenêtre d'entrée du détecteur. Les deux configurations présentent chacune des avantages et des inconvénients.

La première configuration permet d'optimiser séparément le scintillateur et le capteur. Le scintillateur peut alors recevoir des traitements thermiques, même si ceux-ci sont incompatibles avec le capteur. Pour déposer de l'iodure de césium, on l'évapore par chauffage et il se dépose sur le support en se condensant. On effectue ensuite une opération de recuit à environ 300°C pour atteindre un optimum de rendement de fluorescence. Lorsque la substance scintillatrice est déposée directement sur le capteur dans la seconde configuration, dite du dépôt direct, il faut faire un compromis sur la température de recuit pour ne pas endommager le capteur.

Un autre avantage de la première configuration est que le capteur et le scintillateur ne sont assemblés que s'ils ont été testés avec succès ce qui permet d'améliorer le rendement global de fabrication. La première configuration permet une meilleure gestion des flux de production en réalisant la fabrication séparée des deux éléments que sont le scintillateur avec son support d'une part, et le capteur d'autre part. Dans la seconde configuration, dite du dépôt direct, chaque fois que le scintillateur est défectueux, le capteur est mis au rebut car on ne se risque pas à tenter de le recycler. Le coût du support tel que décrit dans la première configuration est inférieur à celui du capteur servant de support à la substance scintillatrice dans la seconde configuration. On fera ainsi face à une moindre perte dans le cas d'un dépôt de substance scintillatrice déficiente qui pousserait à l'élimination du scintillateur et de son support.

Dans la première configuration, l'épaisseur de colle pour l'assemblage apporte quelques pertes en termes de résolution spatiale du détecteur de rayonnement X et de collection de lumière. Le dépôt direct du scintillateur sur le capteur offre au contraire les meilleures conditions de couplage optique.

Enfin, la première configuration peut s'appliquer à des éléments photosensibles constitués d'ensembles de plusieurs éléments raboutés, tels que par exemple décrits dans les brevets français publiés sous les numéros FR 2 758 654 et FR 2 758 656. La seconde configuration ne peut pas s'appliquer à de tels ensembles photosensibles constitués d'ensembles de plusieurs éléments raboutés, du fait de la, mauvaise stabilité dimensionnelle de tels ensembles à une température de 300°C, laquelle température est nécessaire à la mise en oeuvre de la substance scintillatrice après son dépôt sur son support.

L'invention sera mieux comprise et d'autres caractéristiques et avantages apparaîtront à la lecture de la description détaillée de plusieurs modes de réalisation de l'invention, modes donnés à titre d'exemple. La description est illustrée par le dessin joint dans lequel :
la figure 1 représente un détecteur de radiologie selon la première configuration ;
la figure 2 représente un détecteur de radiologie selon la seconde configuration ;
les figures 3a et 3b représentent un exemple de connexion de la fenêtre d'entrée au travers de la fenêtre additionnelle ;
les figures 4a et 4b représentent un exemple de connexion de la fenêtre d'entrée au travers d'un joint de scellement ;
les figures 5a et 5b représentent un exemple de connexion de la fenêtre d'entrée par un substrat du capteur photosensible.

Sur ces figures, les échelles ne sont pas respectées dans un souci de clarté.

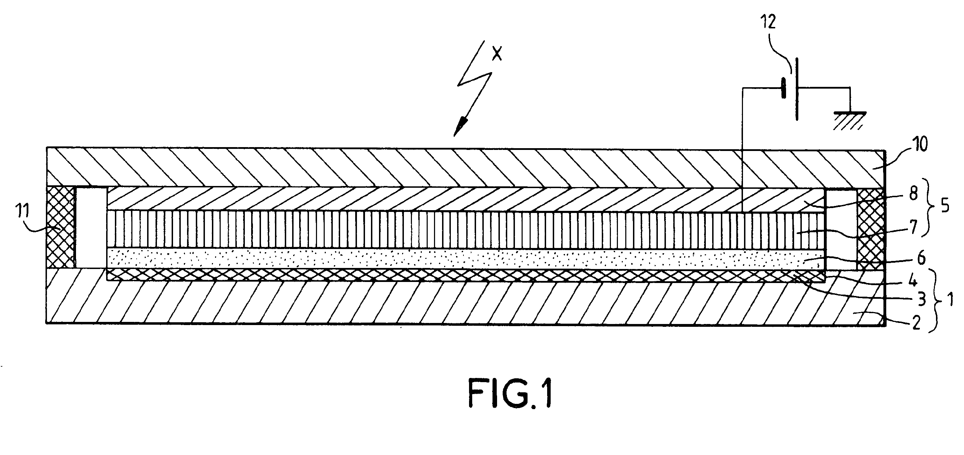

La première configuration, dite du scintillateur rapporté, est représentée sur la figure 1. Le capteur de rayonnement porte la référence 1. II comporte un substrat 2, en principe une dalle en verre, supportant des éléments photosensibles 3. Chaque élément photosensible 3 est monté entre un conducteur de ligne et un conducteur de colonne de manière à pouvoir être adressé. Les conducteurs ne sont pas visibles sur la figure dans un but de simplification. Les éléments photosensibles 3 et les conducteurs sont généralement recouverts d'une couche de passivation 4 destinée à les protéger de l'humidité.

Dans cette configuration, le capteur 1 coopère avec un scintillateur 5 qui dans l'exemple est couplé optiquement au capteur 1 avec de la colle optique 6. Le scintillateur 5 comporte une couche de substance scintillatrice 7, représentée avec une structure en aiguilles, déposée sur un support 8. Le support 8 porte ainsi la substance scintillatrice 7. La substance scintillatrice 7 appartient par exemple à la famille des halogénures alcalins tel l'iodure de césium qui est particulièrement sensible à l'oxydation humide, mais elle pourrait également appartenir à la famille des oxysulfures de terres rares dont certains membres sont également peu stables comme l'oxysulfure de lanthane. Le support 8 forme la fenêtre d'entrée du détecteur.

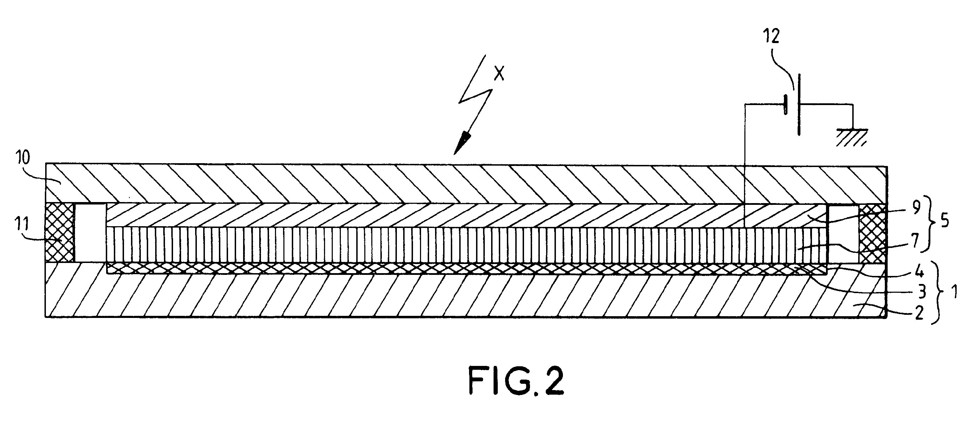

Dans la seconde configuration, représentée sur la figure 2, configuration dite du dépôt direct, au lieu de déposer la substance scintillatrice 7 sur le support 8 et de rapporter cet ensemble formant le scintillateur 5 sur le capteur 1, comme l'illustre la figure 1, la substance scintillatrice 7 est déposée directement sur le capteur 1 et une feuille 9 recouvre la substance scintillatrice 7. La feuille 9 sert à la protection de la substance scintillatrice 7 et forme la fenêtre d'entrée du détecteur. Par souci de simplicité, dans la seconde configuration, l'ensemble formé par la substance scintillatrice 7 et la feuille 9 portera le repère 5 et sera dénommée scintillateur comme dans la première configuration.

Dans les détecteurs de rayonnement X représentés sur les figures 1 et 2, une fenêtre d'entrée additionnelle 10 est posée sur le scintillateur 5 sans être fixée sur lui. Un joint de scellement 11 étanche fixe la fenêtre d'entrée10 au capteur 1 ou plus précisément à son substrat 2.

Selon l'invention, on applique une tension électrique 12 entre la fenêtre d'entrée 8 ou 9 selon la configuration retenue et le capteur photosensible 1.

Lors du fonctionnement du détecteur, des charges électriques positives s'accumulent, par exemple, au niveau des éléments photosensibles 3 et tendent à créer un champ électrique dirigé de la fenêtre d'entrée 8 ou 9 vers le capteur photosensible 1. Par application de la tension électrique 12, on tend idéalement à annuler ce champs électrique. On peut éventuellement moduler la tension électrique 12 de façon à créer un champ électrique non nul dirigé du capteur photosensible 1 vers la fenêtre d'entrée 8 ou 9. En effet, le capteur photosensible comporte généralement des jonctions P-N appartenant à des photodiodes ou à des phototransistors sensibles à des photons émis par le scintillateur 5. L'accumulation de charges positives au niveau des jonctions P-N tend à modifier les zones de désertion des jonctions PN et, par conséquent, à augmenter les courants de fuites du capteur 1 et donc à réduire sa sensibilité.

L'application de la tension électrique 12 sur la fenêtre d'entrée 8 ou 9 permet de réduire la migration d'espèces ioniques issues de la décomposition du scintillateur 5 vers le capteur 1.

L'application de la tension électrique 12 présente un autre avantage. En effet, le détecteur et notamment le capteur 1 fonctionnent à haute impédance et sont donc facilement perturbables par des influences électromagnétiques internes ou externes. La fenêtre d'entrée 8 ou 9, lorsqu'une tension lui est appliquée, forme un écran vis-à-vis des influences électromagnétiques et protège donc le détecteur.

La mise en oeuvre de l'invention est d'une grande simplicité. En effet, le détecteur est commandé par un circuit électronique, non représenté, qui comporte généralement au moins un générateur de tension continue nécessaire à son fonctionnement. La mise en oeuvre de l'invention peut simplement consister à raccorder le générateur de tension continue à la fenêtre d'entrée 8 ou 9. La puissance électrique consommée par la mise en oeuvre de l'invention étant quasi nulle, il n'est pas nécessaire de modifier le générateur de tension. Cet avantage permet de mettre en oeuvre simplement l'invention sur un détecteur qui n'avait pas été conçu à cet effet. En d'autres termes, le rétrofit de détecteurs existant pour mettre en oeuvre l'invention est chose facile.

La tension électrique appliquée à la fenêtre d'entrée 8 ou 9 peut être continue ou modulée dans le temps de façon à suivre au plus près la valeur du potentiel appliqué au capteur 1, potentiel qui varie en fonction de la phase de fonctionnement du capteur 1 dans laquelle on se trouve. On distingue principalement deux phases, une phase d'acquisition et une phase de lecture du capteur 1. Pour plus de détail sur le fonctionnement d'un capteur 1, on peut par exemple se référer à la demande de brevet français publiée sous le n° FR 2 760 585.

Avantageusement, le détecteur comporte des moyens pour que la tension soit appliquée de façon sensiblement uniforme à la fenêtre d'entrée 8,9.

Plus précisément, la tension est appliquée à la fenêtre d'entrée 8 ou 9 par une ou plusieurs connexions selon la conductivité du matériau retenu pour réaliser la fenêtre d'entrée 8 ou 9. Par exemple, dans la première configuration, si le support 8 est une plaque d'aluminium, un nombre moins important de connexion ne sera nécessaire que si le support 8 est réalisé au moyen d'un substrat polymère recouvert d'une couche métallique, qui peut être réalisée par dépôt chimique ou par pulvérisation.

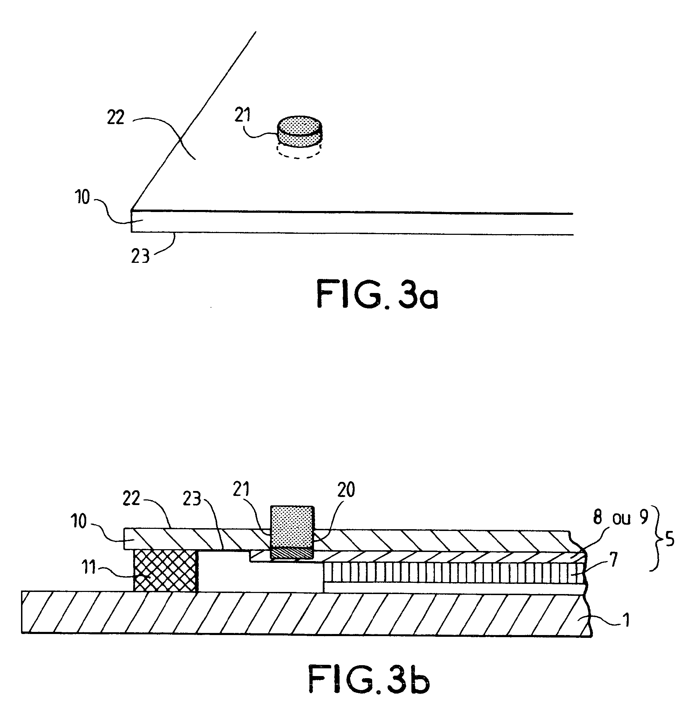

Les figures 3, 4 et 5 représentent des exemples de réalisation de connexion électrique de la fenêtre d'entrée 8 ou 9 dans le cas où cette fenêtre d'entrée est recouverte d'une fenêtre additionnelle 10. Ces trois figures ne représentent qu'une seule connexion électrique. Il est bien entendu possible de réaliser plusieurs connexions semblables pour la même fenêtre d'entrée 8 ou 9, afin d'améliorer l'uniformité du potentiel appliqué à la fenêtre d'entrée 8 ou 9 par la tension électrique.

Sur les figures 3a et 3b, les moyens pour appliquer la tension électrique comportent une jonction électrique 20 traversant la fenêtre additionnelle 10. La figure 3a représente en perspective la jonction électrique 20 et la figure 3b représente en coupe cette même jonction 20.

Plus précisément, la jonction électrique 20 comporte un matériau conducteur connecté à la fenêtre d'entrée 8 ou 9, par exemple au moyen d'une colle conductrice. Le matériau remplit un trou 21 réalisé dans la fenêtre additionnelle 10 et débouche à l'extérieur du détecteur sur une face 22 de la fenêtre additionnelle 10 opposée à celle 23 en contact avec la fenêtre d'entrée 8 ou 9. Le matériau est avantageusement choisi de telle sorte que son coefficient de dilatation thermique soit proche de celui de la fenêtre additionnelle 10. Par exemple, si la fenêtre additionnelle est en verre, le matériau retenu peut être un alliage de fer, nickel et cobalt tel que par exemple du dilver ou du kovar. Le passage de la jonction électrique 20 au travers de traversant la fenêtre additionnelle 10 est étanche. L'étanchéité est par exemple assurée au moyen d'une colle.

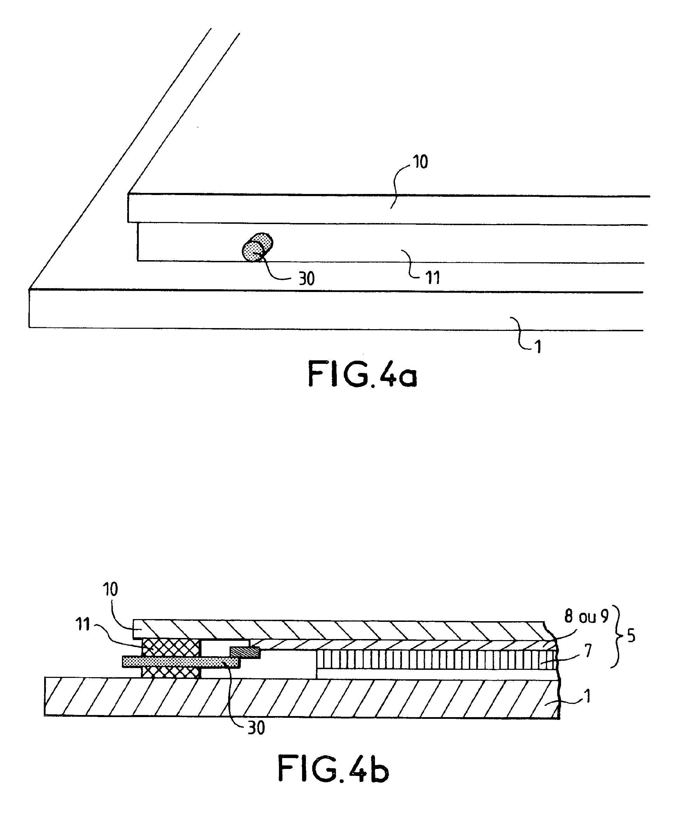

Sur les figures 4a et 4b, les moyens pour appliquer la tension électrique comportent un passage conducteur 30 traversant le joint de scellement 11.

La figure 4a représente en perspective le passage conducteur 30 et la figure 4b représente en coupe ce même passage 30. Plus précisément, le passage conducteur 30 est réalisé dans un matériau conducteur et sa liaison avec le joint de scellement 11 est étanche. Le passage conducteur est raccordé à l'intérieur du détecteur à la fenêtre d'entrée 8 ou 9 par exemple par collage. Par l'extérieur du détecteur, on applique au passage conducteur 30 la tension électrique.

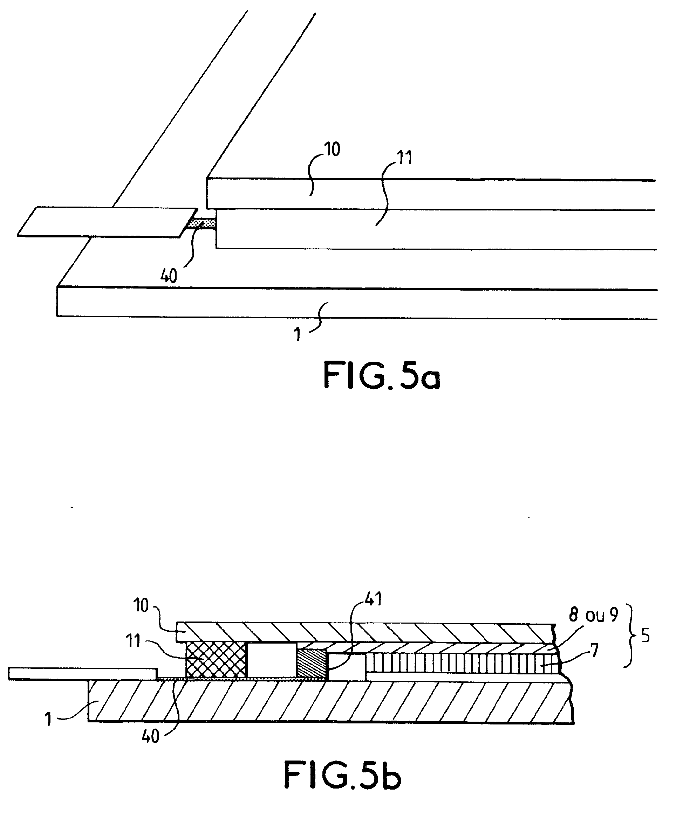

Sur les figures 5a et 5b, les moyens pour appliquer la tension électrique comportent une piste 40 réalisée sur le capteur photosensible 1. La figure 5a représente en perspective la piste 40 et la figure 5b représente en coupe cette même piste 40. Plus précisément, la piste 40 est, par exemple, réalisée directement sur le capteur 1 ou plus exactement sur son substrat. La piste 40 est raccordée à l'intérieur du détecteur à la fenêtre d'entrée 8 ou 9 au moyen d'un plot 41, conducteur qui peut être collé à la fois sur la piste 40 et sur la fenêtre d'entrée 8 ou 9. Comme précisément, on applique, par l'extérieur du détecteur, à la piste 40 la tension électrique. L'étanchéité autour la piste 40 est assurée par le joint de scellement 11.

## Revendications

1. Détecteur de rayonnement X à l'état solide comportant un capteur photosensible (1), un scintillateur (5) transformant le rayonnement X en un rayonnement auquel le capteur (1) est sensible, et une fenêtre d'entrée (8, 9) traversée par le rayonnement X en amont du scintillateur (5), **caractérisé en ce que** le détecteur comporte des moyens pour appliquer une tension électrique entre la fenêtre d'entrée (8, 9) et le capteur photosensible (1), ces moyens étant adaptés pour annuler le champ électrique induit entre le capteur photosensible (1) et le substrat du scintillateur (5) lors du fonctionnement du détecteur.

2. Détecteur de rayonnement X selon la revendication 1, **caractérisé en ce que** le scintillateur (5) comporte un support (8) et une substance scintillatrice (7), **en ce que** le support (8) est distinct du capteur (1), et **en ce que** le support (8) forme la fenêtre d'entrée du capteur (1).

3. Détecteur de rayonnement X selon la revendication 1, **caractérisé en ce que** le scintillateur (5) comporte une substance scintillatrice (7), **en ce que** le capteur (1) est utilisé comme support de la substance scintillatrice (7), **en ce qu'**une feuille (9) de protection du scintillateur (5) recouvre la substance scintillatrice (7) et ce que la feuille (9) forme la fenêtre d'entrée du capteur (1).

4. Détecteur selon l'une des revendications précédentes, **caractérisé en ce qu'**il comporte des moyens pour que la tension soit appliquée de façon sensiblement uniforme à la fenêtre d'entrée (8, 9).

5. Détecteur selon l'une des revendications précédentes, **caractérisé en ce que** la tension électrique est modulée dans le temps.

6. Détecteurs selon l'une des revendications précédentes, **caractérisé en ce qu'**une fenêtre additionnelle (10) est posée sur le scintillateur (5), sans être fixée au scintillateur (5) et **en ce qu'**un joint de scellement (11) étanche à l'humidité fixe la fenêtre additionnelle (10) et le capteur (1).

7. Détecteur selon la revendication 6, **caractérisé en ce que** les moyens pour que la tension soit appliquée de façon sensiblement uniforme comportent une jonction électrique (20) traversant la fenêtre additionnelle (10).

8. Détecteur selon la revendication 6, **caractérisé en ce que** les moyens pour que la tension soit appliquée de façon sensiblement uniforme comportent un passage conducteur (30) traversant le joint de scellement (11).

9. Détecteur selon la revendication 6, **caractérisé en ce que** les moyens pour que la tension soit appliquée de façon sensiblement uniforme comportent une piste (40) réalisée sur le capteur photosensible (1).

## Claims

1. A solid state X-radiation detector comprising a light-sensitive sensor (1), a scintillator (5) converting the X-radiation into radiation to which the sensor (1) is sensitive, and an entry window (8, 9) through which the X-radiation passes upstream of the scintillator (5), **characterised in that** the detector comprises means for applying an electric voltage between the entry window (8, 9) and the light-sensitive sensor (1), said means being designed to cancel out the electrical field induced between the light sensitive sensor (1) and the substrate of the scintillator (5) during operation of the detector.

2. The X-radiation detector according to claim 1, **characterised in that** the scintillator (5) comprises a support (8) and a scintillating substance (7), **in that** the support (8) is distinct from the sensor (1) and **in that** the support (8) forms the entry window of the sensor (1).

3. The X-radiation detector according to claim 1, **characterised in that** the scintillator (5) comprises a scintillating substance (7), **in that** the sensor (1) is used as a support for the scintillating substance (7), **in that** a protective layer (9) of the scintillator (5) covers the scintillating substance (7) and **in that** the layer (9) forms the entry window of the sensor (1).

4. The detector according to any one of the preceding claims, **characterised in that** it comprises means for applying the voltage to the entry window (8, 9) in a substantially uniform manner.

5. The detector according to any one of the preceding claims, **characterised in that** the electric voltage is modulated over time.

6. Detectors according to any one of the preceding claims, **characterised in that** an additional window (10) is placed on the scintillator (5) without being fixed to the scintillator (5) and **in that** a watertight seal (11) fixes the additional window (10) and the sensor (1).

7. The detector according to claim 6, **characterised in that** the means for applying the voltage in a substantially uniform manner comprise an electrical connection (20) passing through the additional window (10).

8. The detector according to claim 6, **characterised in that** the means for applying the voltage in a substantially uniform manner comprise a conducting passage (30) passing through the watertight seal (11).

9. The detector according to claim 6, **characterised in that** the means for applying the voltage in a substantially uniform manner comprise a track (40) made on the light-sensitive sensor (1).

## Patentansprüche

1. Festkörper-Röntgenstrahlungsdetektor, der Folgendes umfasst: einen lichtempfindlichen Sensor (1), einen Szintillator (5) zum Umwandeln der Röntgenstrahlung in Strahlung, für die der Sensor (1) empfindlich ist, und ein Eingangsfenster (8, 9), durch das die Röntgenstrahlung oberhalb des Szintillators (5) passiert, **dadurch gekennzeichnet, dass** der Detektor Mittel zum Anlegen einer elektrischen Spannung zwischen dem Eingangsfenster (8, 9) und dem lichtempfindlichen Sensor (1) umfasst, wobei die Mittel so ausgelegt sind, dass sie das elektrische Feld löschen, das zwischen dem lichtempfindlichen Sensor (1) und dem Substrat des Szintillators (5) während des Betriebs des Detektors induziert wird.

2. Röntgenstrahlungsdetektor nach Anspruch 1, **dadurch gekennzeichnet, dass** der Szintillator (5) einen Träger (8) und eine Szintillationssubstanz (7) umfasst, **dadurch**, dass der Träger (8) vom Sensor (1) getrennt ist, und **dadurch**, dass der Träger (8) das Eingangsfenster des Sensors (1) bildet.

3. Röntgenstrahlungsdetektor nach Anspruch 1, **dadurch gekennzeichnet, dass** der Szintillator (5) eine Szintillationssubstanz (7) umfasst, **dadurch**, dass der Sensor (1) als Träger der Szintallationssubstanz (7) benutzt wird, **dadurch**, dass eine Schutzschicht (9) des Szintillators (5) die Szintillationssubstanz (7) bedeckt, und **dadurch**, dass die Schicht (9) das Eingangsfenster des Sensors (1) bildet.

4. Detektor nach einem der vorherigen Ansprüche, **dadurch gekennzeichnet, dass** er Mittel umfasst, damit die Spannung auf eine im Wesentlichen gleichförmige Weise an das Eingangsfenster (8, 9) angelegt wird.

5. Detektor nach einem der vorherigen Ansprüche, **dadurch gekennzeichnet, dass** die elektrische Spannung im Laufe der Zeit moduliert wird.

6. Detektor nach einem der vorherigen Ansprüche, **dadurch gekennzeichnet, dass** ein zusätzliches Fenster (10) auf den Szintillator (5) gelegt wird, ohne es am Szintallator (5) zu befestigen, und **dadurch**, dass eine feuchtigkeitsundurchlässige Dichtung (11) das zusätzliche Fenster (10) und den Sensor (1) befestigt.

7. Detektor nach Anspruch 6, **dadurch gekennzeichnet, dass** die Mittel zum Anlegen der Spannung auf eine im Wesentlichen gleichförmige Weise eine elektrische Verbindung (20) aufweisen, die durch das zusätzliche Fenster (10) passiert.

8. Detektor nach Anspruch 6, **dadurch gekennzeichnet, dass** die Mittel zum Anlegen der Spannung auf eine im Wesentlichen gleichförmige Weise einen leitenden Kanal (30) umfasst, der durch die Dichtung (11) verläuft.

9. Detektor nach Anspruch 6, **dadurch gekennzeichnet, dass** die Mittel zum Anlegen der Spannung auf eine im Wesentlichen gleichförmige Weise eine auf dem lichtempfindlichen Sensor (1) gebildete Bahn (40) umfassen.
